# EUROPEAN PATENT APPLICATION

(11) **EP 1 354 724 A1**
(43) Date of publication of application: **22.10.2003**
(21) Application number: 02252682.6
(22) Date of filing: 16.04.2002
(51) Int. Cl.: B60B 17/00, B61F 7/00

(54) **Wheel assembly for different track gauges**

(71) Applicant: Chung, In Hyo, Seoul (KR)
(72) Inventor: Chung, In Hyo, Seoul (KR)
(74) Representative: Orr, William McLean

(57) **Abstract**

Disclosed is a train wheel assembly. The train wheel assembly comprises a pair of wheels (1,1') respectively connected to both ends of an axle (8). Each wheel is formed, at both axial ends thereof, with inside and outside flanges (2,3). A wide tread (4) is defined between the inside and outside flanges. The wide tread possesses an axial length which is capable of accommodating a railhead even when a railroad gauge varies between narrow and standard gauges (h and H) or between standard and wide gauges (h and H).

## Description

### BACKGROUND OF THE INVENTION

### Field of the Invention

The present invention relates to a wheel assembly of a railroad car.

### Description of the Related Art

Generally, a railroad gauge, that is, a distance measured between railheads of a pair of rails on which a train runs, varies depending upon a country or a region even in the same country. As freight transportation by train has been pervaded throughout the world, variation in railroad gauge is regarded as a serious problem to be overcome.

A network of railroads serving as a kind of social overhead capital has a large scale and requires enormous expenses. In this regard, when a train crosses a border into another country, if railroad gauges of two countries are different from each other, the train cannot proceed. Thus, a great deal of efforts have been made to develop a device which can allow a train to continue its travel upon encountering a variation of a railroad gauge, without the need of changing passengers or freight to another train.

Railroad gauges of various countries are given for reference in TABLE 1.

**TABLE 1**

| Country | Railroad Gauge (mm) |
|---|---|
| South Korea, North Korea, European Community, China, U.S.A., Japan | 1,435 (Standard) |
| Chile, Argentina, India, Pakistan | 1,676 |
| Portugal, Spain | 1,672 |
| Brazil, Ireland | 1,600 |
| Russia, Finland | 1,524 |
| Regional Japan, Australia, New Zealand, South Africa | 1,067 |
| Regional India, Regional Brazil, Regional Argentina, Regional European Community | 1,000 |
| Regional U.S.A., Mexico | 914 |
| Regional Brazil, Regional India | 762 |

### SUMMARY OF THE INVENTION

Accordingly, the present invention has been made in an effort to solve the problems occurring in the related art, and an object of the present invention is to provide a train wheel assembly which can continuously run on rails having standard, wide and narrow gauges. In the conventional art in which an interval between two wheels is actually adjusted whenever a railroad gauge varies, danger increases upon performing such an interval adjustment operation, and an interval adjusting device should be mounted to each railroad car. On the contrary, in the present invention, a construction of a train wheel assembly is modified in a manner such that the train wheel assembly can continuously run on rails of different railroad gauges.

In order to achieve the above object, according to one aspect of the present invention, there is provided a train wheel assembly comprising: a pair of wheels respectively connected to both ends of an axle, each wheel being formed, at both axial ends thereof, with inside and outside flanges and having a wide tread which is defined between the inside and outside flanges.

According to another aspect of the present invention, the wide tread formed between the inside and outside flanges possesses an axial length which is capable of accommodating a railhead even when a railroad gauge varies between narrow and standard gauges or between standard and wide gauges.

### BRIEF DESCRIPTION OF THE DRAWINGS

The above objects, and other features and advantages of the present invention will become more apparent after a reading of the following detailed description when taken in conjunction with the drawings, in which:
FIG. 1 is a cross-sectional view illustrating a train wheel assembly in accordance with an embodiment of the present invention, which is rested on rails of a standard railroad gauge;
FIG. 2 is a cross-sectional view illustrating the train wheel assembly according to the present invention, which is rested on rails of a wide railroad gauge; and
FIG. 3 is a schematic plan view illustrating a state wherein the train wheel assembly according to the present invention transfers from the rails of a standard railroad gauge to the rails of a wide railroad gauge.

### DETAILED DESCRIPTION OF PREFERRED EMBODIMENTS

Reference will now be made in greater detail to a preferred embodiment of the invention, an example of which is illustrated in the accompanying drawings. Wherever possible, the same reference numerals will be used throughout the drawings and the description to refer to the same or like parts.

A train wheel assembly in accordance with an embodiment of the present invention comprises a pair of wheels each of which is formed, at both axial ends thereof, with inside and outside flanges. A wide tread is defined between the inside and outside flanges of each wheel.

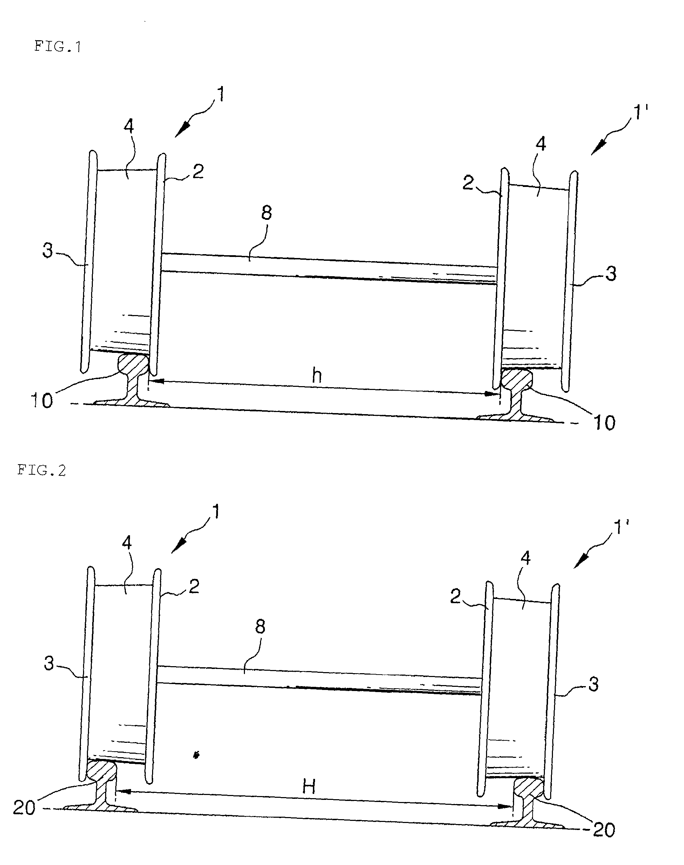

Concretely speaking, in the present invention, as shown in FIGs. 1 and 2, a pair of wheels 1 and 1' are respectively connected to both ends of an axle 8. Each of the wheels 1 and 1' is formed, at both axial ends thereof, with inside and outside flanges 2 and 3. A wide tread 4 is defined between the inside and outside flanges 2 and 3. The wide tread 4 possesses an axial length which is capable of accommodating a railhead even when a railroad gauge varies between narrow and standard gauges or between standard and wide gauges. As in the conventional wheel of a railroad car, the wide tread 4 of the present invention is tapered to be decreased in its diameter toward the outside flange 3.

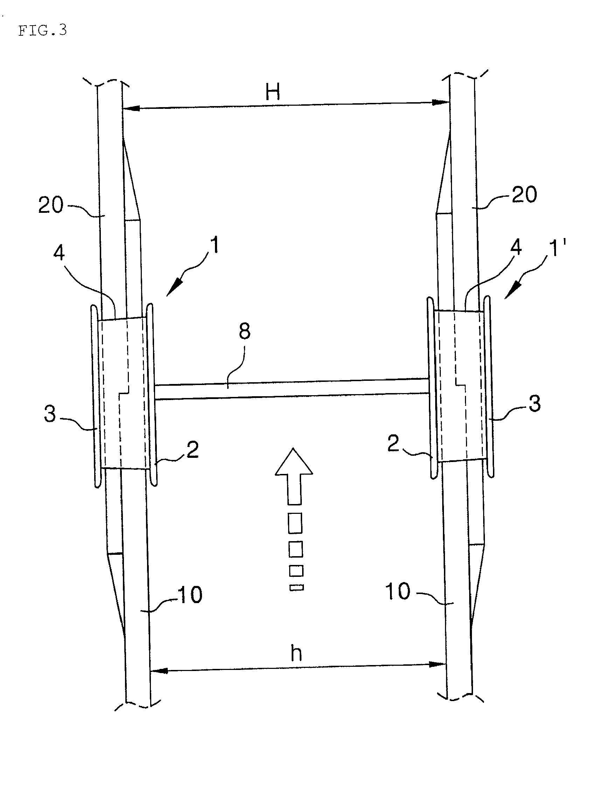

As shown in FIG. 1, when a train runs on a pair of first rails 10 which have a standard railroad gauge designated by the reference character h, railheads of the first rails 10 are brought into contact with the wide tread 4 adjacent to the inside flange 2. Then, as shown in FIG. 2, if the pair of wheels 1 and 1' transfers from the pair of first rails 10 to a pair of second rails 20 which have a wide railroad gauge designated by the reference character H, railheads of the second rails 20 are brought into contact with the wide tread 4 adjacent to the outside flange 3. Therefore, by jointing the first rails 10 of the standard railroad gauge h and the second rails 20 of the wide railroad gauge H with each other as shown in FIG. 3, the train having the pair of wheels 1 and 1' can continuously run on the first and second rails 10 and 20 having standard and wide railroad gauges. In this connection, it is to be readily understood that, only by constructing two pairs of wheels, it is possible to accommodate railheads even when a railroad gauge varies between narrow and standard gauges and between standard and wide gauges.

As apparent from the above description, according to the present invention, advantages are provided in that a construction of a train wheel assembly is modified to allow the train wheel assembly to continuously run on rails of different railroad gauges. That is to say, through an increase in axial length of each wheel, the need of changing passengers or freight to another train is eliminated.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A train wheel assembly comprising:
a pair of wheels respectively connected to both ends of an axle, each wheel being formed, at both axial ends thereof, with inside and outside flanges and having a wide tread which is defined between the inside and outside flanges.

2. The train wheel assembly as set forth in claim 1, wherein the wide tread formed between the inside and outside flanges possesses an axial length which is capable of accommodating a railhead even when a railroad gauge varies between narrow and standard gauges or between standard and wide gauges.
